# EUROPEAN PATENT SPECIFICATION

(11) **EP 1 815 056 B1**
(45) Date of publication and mention of the grant of the patent: **24.02.2010**
(21) Application number: 05799831.2
(22) Date of filing: 04.11.2005
(51) Int. Cl.: D06F 75/12

(54) **METHOD OF AN DEVICE FOR PERFORMING BI-DIRECTIONAL TRANSMISSION USING A SINGLE-WIRE**
VERFAHREN UND VORRICHTUNG ZUR DURCHFÜHRUNG EINER DATENÜBERTRAGUNG IN ZWEI RICHTUNGEN MIT EINEM EINZELDRAHT
PROCEDE ET DISPOSITIF PERMETTANT D'EFFECTUER UNE TRANSMISSION BIDIRECTIONNELLE AU MOYEN D'UN SEUL CABLE

(30) Priority: 10.11.2004 EP 04105662
(43) Date of publication of application: 08.08.2007
(73) Proprietor: Koninklijke Philips Electronics N.V., 5621 BA Eindhoven (NL)
(72) Inventor: HAR, Tang, P., NL-5656 AA Eindhoven (NL); TEO, Adeline, NL-5656 AA Eindhoven (NL); JIA, Xiaoming, NL-5656 AA Eindhoven (NL)
(74) Representative: Damen, Daniel Martijn
(86) International application number: PCT/IB2005/053607
(87) International publication number: WO 2006/051458

(56) References cited:
- WO-A-02/35724
- US-A- 4 178 504
- US-B1- 6 407 402

## Description

The invention relates to a communication system for transferring data over a single signal wire between a first and a second system, a method of communicating in such a communication system, and an ironing system comprising the communication system.

US-A-5,412,644 discloses a circuit arrangement for a single-wire bus system wherein a processor reads data from a transmitter. The transfer of data over a single-wire line is controlled exclusively by the processor. The processor generates a pulse sequence on the single-wire line that is stopped by the transmitter after attainment of a predetermined number of pulses by locking the single-wire line at a predetermined voltage level. This circuit does not disclose how to communicate over a single-wire line if a galvanic separation is required.

An other example can be found in the application US 4 178 504.

It is an object of the invention to provide a communication system for transferring bi-directional data over a single signal wire between a first and a second system which are galvanic separated.

A first aspect of the invention provides a communication system for transferring data over a single signal wire between a first and a second system as claimed in claim 1. A second aspect of the invention provides a method of communicating in such a communication system as claimed in claim 5. A third aspect of the invention provides an ironing system comprising the communication system as claimed in claim 6.

Advantageous embodiments are defined in the dependent claims.

The communication system in accordance with the first aspect of the invention transfers data over a single signal wire between a first and a second system which are galvanic separated.

The first system comprises a first controller which supplies an output signal and a switch signal, and which receives an adapted input signal. The output signal, the switch signal, the adapted input signal and the first controller are referenced to a first ground potential. Thus the first controller generates the output signal and the switch signal with respect to the first ground potential and processes the adapted input signal with respect to the first ground potential. A first galvanic separating unit receives the output signal and the first ground potential to supply to the single signal wire an adapted output signal which is the output signal but now referenced to a second ground potential. Said differently, the first galvanic separating unit converts the output signal which is referenced with respect to the first ground potential to an adapted output signal which is the output signal but now referenced with respect to the second ground potential. Consequently, the first galvanic separating circuit comprises an element which is both able to transfer a signal and to provide galvanic separation. For example, the first galvanic separating circuit comprises a transformer, or an opto-coupler which is also referred to as an opto-insulator or an opto-separator. A second galvanic separating unit receives an input signal and the second ground potential to supply the adapted input signal which is the input signal referenced to the first ground potential. A galvanic separated switching unit receives the switch signal and the first ground potential and has a switching path arranged between the single signal wire and the second galvanic separating unit. The switch signal controls the on and off state of the switching path over a galvanic separation. For example, the second galvanic separating unit comprises an opto-triac, or a transformer to transfer information indicating the desired impedance of the switching path. Preferably, the on-state and off-state of the switching path is determined by a main current path of a semiconductor device. The off-state may be obtained by a sufficiently high impedance of the switching path such that the signal on the single signal wire is not supplied as a detectable input signal to the first controller. The on-state may be obtained by a sufficiently low impedance of the switching path such that the signal on the single signal wire is supplied as a detectable input signal to the first controller.

The second system comprises a second controller which supplies the input signal and which receives the adapted output signal. The second controller and both the input signal and the adapted output signal are referenced to the second ground potential. The second controller generates the input signal with respect to the second ground potential and processes the adapted output signal with respect to the second ground potential. Thus, the input signal for the first controller referenced to the first ground potential is supplied as an output signal of the second controller referenced to the second ground potential on the single signal wire. The second galvanic separating unit converts the input signal on the single signal wire and referenced to the second ground potential to the adapted input signal referenced to the first ground potential. The output signal from the first controller which is referenced to the first ground potential is converted to the adapted input signal referenced to the second ground potential and supplied to the single signal wire by the first galvanic separating circuit. The second controller is able to process the adapted input signal.

The galvanic separated switching unit separates the input of the first controller from its output which supplies the output signal to prevent the output signal to influence the input and thereby the communication protocol.

It has to be noted that US6,407,402 discloses a battery stack which communicates with a bidirectional I2C bus 30 with an isolation device 50. The isolation device 50 communicates via 2 unidirectional I2C busses with a monitor module 40. The isolation device 50 comprises for each (data or clock) line of each I2C bus 30 a conversion circuit with two optocoupler devices. One of the optocoupler devices is used to receive the data or clock signal on the bidirectional bus and to supply it to a unidirectional bus which provides data or clock from the battery stack to the monitor module. The other optocoupler is used to receive the data or clock signal from the unidirectional bus and to supply this data or clock to the bidirectional bus connected to the battery stack. Thus, each conversion circuit is converting a bidirectional signal on a single wire to two unidirectional signals on two associated wires while a galvanic separation is created between the single wire and the two wires.

This prior art does not disclosed that a galvanic separated switching unit is present to prevent the output signal of the controller to influence the input thereof. The use of the galvanic separated switching unit allows more flexibility in selecting a communication protocol between the first and the second controller. Further, this prior art is directed to a system in which the communication is performed over a plurality of I2C busses which each comprise a data and a clock wire.

In an embodiment in accordance with the invention as claimed in claim 2, the first galvanic separating unit comprises an optocoupler. The light emitting diode of the optocoupler receives the output signal and the first ground potential to generate an amount of light determined by the output signal. The main current path of the light sensitive transistor of the optocoupler is arranged between the second ground potential and the single signal wire to supply the adapted output signal referenced with respect to the second ground potential. The adapted output signal is determined by the amount of light received by the light sensitive transistor.

In an embodiment in accordance with the invention as claimed in claim 3, the second galvanic separating unit comprises an optocoupler. The light emitting diode of the optocoupler receives the input signal and the second ground potential, and supplies an amount of light determined by the input signal. The light sensitive transistor of the optocoupler is arranged between the first ground potential and an input of the first controller to supply the adapted input signal referenced to the first ground potential to this input. The adapted input signal is determined by the amount of light received by the light sensitive transistor.

In an embodiment in accordance with the invention as claimed in claim 4, the galvanic separated switching unit comprises an opto-triac. A light emitting diode of the opto-triac receives at one end the switching signal and at another end the first ground potential to generate an amount of light determined by the switching signal. A light sensitive triac of the opto-triac has a main current path arranged between the single signal wire and an input of the second galvanic separating unit for supplying the input signal to the second galvanic separating circuit if the light sensitive triac has a low impedance, and to prevent the input signal to reach the second galvanic separating circuit if the light sensitive triac has a high impedance.

In the method of communicating as defined in claim 5, in a first mode, the first controller supplies the switch level such that the galvanic separated switching circuit disconnects the input terminal of the second galvanic separating circuit from the single signal wire. Thus, the output signal supplied by the first controller via the first galvanic separating circuit as the adapted output signal to the single signal wire is not fed back to the input of the first controller. The second controller receives the adapted output signal. This allows a communication from the first controller to the second controller.

In a second mode, the first controller supplies a switch level such that the galvanic separated switching circuit connects the input terminal of the second galvanic separating circuit to the single signal wire. Thus, the first controller is able to receive the adapted input signal to recover the words of bits send by the by the second controller as the input signal to the single signal wire. This allows a communication from the second controller to the first controller.

In an embodiment in accordance with the invention as claimed in claim 6, the communication system is used in an ironing system which comprises an iron and an ironing station connected to the iron via a cord hose. The single signal wire runs through the cord hose. The ironing station comprises a sensor to sense a state of a sub-unit of the ironing station to obtain a sense signal which indicates the state of the sub-unit. The second controller receives the sense signal to supply sense information as the input signal to the single signal wire. The iron comprises the first controller which receives the input signal from the single signal wire and supplies display information representing the sense information to a display. Thus, a state of a sensed quantity is displayed on the display of the iron by using a single signal wire only and by respecting the galvanic separation between the iron and the iron station.

In an embodiment in accordance with the invention as claimed in claim 7, the sub-unit is a water reservoir and the sensor senses the level of the water in the water reservoir. The display in the iron may indicate the actual level of the water, and/or alerts the user when the water level has dropped below a predetermined minimum level.

In an embodiment in accordance with the invention as claimed in claim 8, the ironing station comprises an anti-scaling agent through which the water flows. The sensor senses the status of the anti-scaling agent. The display in the iron indicates the actual status of the anti-scaling agent, and/or alerts the user when the effectiveness of the anti-scaling agent has dropped below a predetermined minimum level. Usually, the anti-scaling agent will be held in a container through which the water flows when poured into the water reservoir, or through which the water flows when it is pumped out of the container towards the steam generator.

In an embodiment in accordance with the invention as claimed in claim 9, the ironing station has a switch which is arranged in an area where the iron should rest if not in use. The status of this switch may be displayed on the display of the iron. For example, if is sensed that the switch is not activated and a sensor in the iron indicates that the user is not holding the iron, the display of the iron may display a warning.

In an embodiment in accordance with the invention as claimed in claim 10, the ironing station comprises a pump to pump the water in the water reservoir of the ironing station via a conduit in the cord hose to a steam generator of the iron. This has the advantage that the hot steam is not cooled down in the cord hose, and that no dangerous situations occur when the cord hose is damaged. Usually, the pump pumps the water via the container with the anti-scaling agent to the conduit.

In an embodiment in accordance with the invention as claimed in claim 11, the ironing station comprises the water reservoir, the pump, and the steam generator. The pump pumps the water from the water reservoir to the steam generator. Usually, the pump pumps the water via the container with the anti-scaling agent to the steam generator. The ironing station further comprises an electronic controlled valve which is arranged between the steam generator and the conduit in the cord hose. The iron comprises a steam activating switch which is connected to the first controller. The first controller supplies the output signal in accordance with a status of the steam activating switch to the single signal wire which runs through the cord hose to the ironing station. The second controller which is present in the ironing station has an input to receive the signal from the single signal wire and an output for controlling the electronic controlled valve in correspondence with the output signal present on the single signal wire.

In an embodiment in accordance with the invention, a temperature sensor senses the temperature in the steam generator to allow control of the temperature in the steam generator. This has the advantage that the temperature in the steam generator has a value optimally suitable for producing steam.

In an embodiment in accordance with the invention, a water level sensor senses the water level in the steam generator to activate the pump which is pumping water into the steam generator to keep the water level in the steam generator at or above a predetermined level. This has the advantage that always sufficient water is present in the steam generator to guarantee a continuous steam output.

In an embodiment in accordance with the invention, the electro-valve interrupts the steam supply from the ironing station to the iron if the water level sensor indicates that the water level in the steam generator drops below a predetermined level.

In an embodiment in accordance with the invention, the controller in the ironing station may initiate a safety shut-off if is detected that the user is not holding or moving the iron and the iron is not resting at a predetermined resting position on the ironing station. In the safety shut-off state, the heaters of the iron and the steam generator may be switched off.

These and other aspects of the invention are apparent from and will be elucidated with reference to the embodiments described hereinafter.

In the drawings:
Fig. 1 shows a circuit diagram of an embodiment of the communication system which comprises a first controller and a second controller which communicate over a galvanic separation by using a single signal wire,
Figs. 2A-B show signals elucidating the communication from the first controller to the second controller,
Figs. 3A-B show signals elucidating the communication from the second controller to the first controller,
Figs. 4A-B show schematically a representation of an embodiment of an ironing system which comprises an iron and an ironing station,
Figs. 5A-B show schematically a representation of another embodiment of an ironing system which comprises an iron and an ironing station, and
Fig. 6 shows schematically a representation of an ironing system which comprises an iron, an ironing station and an ironing board.

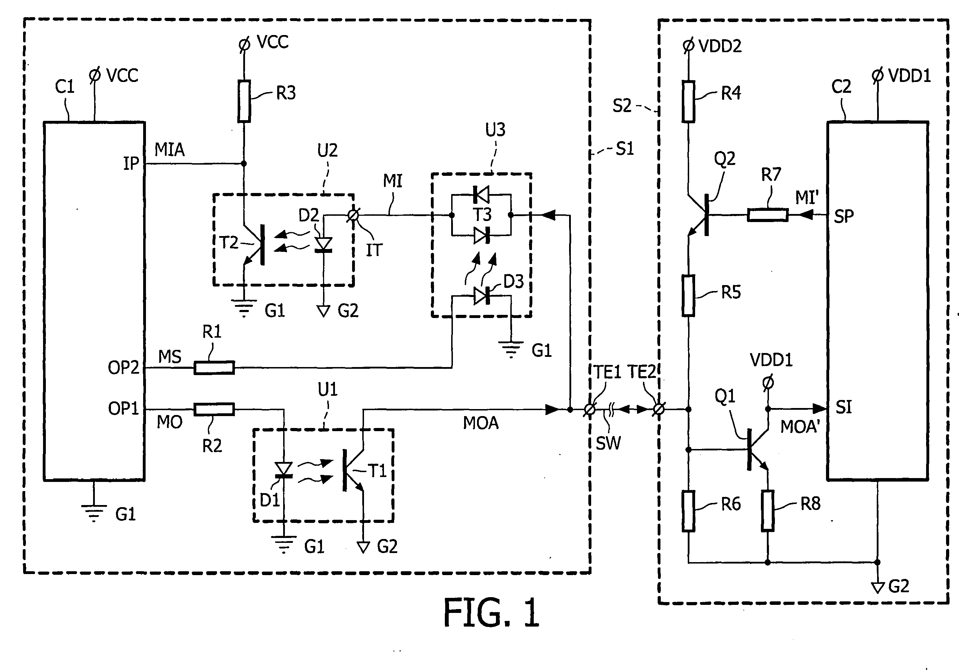

Fig. 1 shows a circuit diagram of an embodiment of the communication system which comprises a first controller and a second controller which communicate over a galvanic separation by using a single signal wire.

The first system S1 comprises a first controller C1, the optocouplers U1 and U2, the opto-triac U3 and the resistors R1, R2, and R3. The first controller C1 receives a power supply voltage between the power supply voltage terminal VCC and the first ground G1. The reference G1 is used to indicate both the physical terminal and the first ground potential present on this terminal.

The first controller C1 further has an output OP1 to supply an output signal MO, an output OP2 to supply a switch signal MS, and an input IP to receive an adapted input signal MIA. The first optocoupler U1 comprises a light emitting diode D1 and a light sensitive transistor T1. The light emitting diode D1 has a cathode connected to the first ground potential G1 and an anode connected to the output OP1 via a current limiting resistor R2. The light sensitive transistor T1 has a main current path which is arranged between a second ground potential G2 and an input/output terminal TE1 of the first system S1. The output terminal TE1 is connected to the single signal wire SW. The second optocoupler U2 comprises a light emitting diode D2 and a light sensitive transistor T2. The light emitting diode D2 has a cathode connected to a terminal IT. The light sensitive transistor T2 has a main current path which is arranged between the first ground potential G1 and the input IP of the first controller C1. A pull-up resistor R3 is arranged between the input IP and the power supply terminal VCC. The opto-triac U3 comprises a light emitting diode D3 and a light triggered triac T3. The light emitting diode D3 has a cathode connected to the first ground potential G1 and an anode connected to the output OP2 via a current limiting resister R1.

The output signal MO determines the current through the diode D1 and thus the amount of light produced by this diode D1. The current through the transistor T1 depends on the amount of light received from the diode D1. The diode D1 and the transistor T1 are galvanic separated. The optocoupler U1 converts the output signal MO supplied by the first controller C1 and which is referenced with respect to the first ground potential into an adapted output signal MOA which is referenced with respect the second ground potential. The adapted output signal MOA is supplied to the second system S2 via the single signal wire SW. The second system S2 is able to process the adapted output signal MOA because both the second system S2 and the adapted output signal MOA are referenced to the second ground potential G2.

The switch signal MS determines the amount of light generated by the diode D3. If the switch signal MS has a high level, the diode D3 produces a relatively large amount of light and the triac T3 is activated to have a low impedance such that the diode D2 is effectively connected to the single signal wire SW. If the switch signal MS has a low level, the diode D3 produces a relatively small amount of light, or no light at all, and the triac T3 forms a high impedance effectively separating the diode D2 from the single signal wire SW.

If the switch signal MS has a high level, the input signal MI supplied by the second system to the single signal wire SW is supplied to the diode D2. The amount of light generated by the diode D2 controls the impedance of the collector emitter path of the transistor T2 and thus the voltage on the input IP of the first controller C1. The optocoupler U2 transfers the input signal MI which is referenced with respect to the second ground potential G2 into the adapted input signal MIA which is referenced to the first ground potential G1 such that it can be handled by the first controller C1.

The second system S2 comprises the second controller C2, the transistors Q1 and Q2, and the resistors R4 to R8. The second controller C2 receives a power supply voltage between the first power supply voltage terminal VDD1 and the second ground G2. The reference G2 is used to indicate both the physical terminal and the second ground potential present on this terminal.

The second controller C2 further has an output SP to supply an output signal MI', and an input SI to receive an adapted output signal MOA'. The npn transistor Q1 has a base connected to an input/output terminal TE2 of the second system, a collector connected to the first power supply voltage terminal VDD1, and an emitter connected to the second ground potential G2 via the resistor R8. A resistor R6 is arranged between the base of the transistor Q1 and the second ground potential G2. The input/output terminal TE2 is connected to the single signal wire SW. The npn transistor Q2 has a base connected to the output SP via the resistor R7, a collector connected via the resistor R4 to a second power supply terminal VDD2 which carries a higher voltage than the first power supply terminal VDD1, and an emitter connected to the input/output terminal TE2 via the resistor R5.

The circuit which comprises the transistor Q1 and the resistors R6 and R8 converts the adapted output signal MOA supplied by the first system S1 to the single signal wire SW into the input signal MOA' on the input SI of the second controller C2. The circuit which comprises the transistor Q2 converts the output signal MI' on the output SP of the second controller C2 into the input signal MI on the single signal wire SW.

It has to be noted that the circuits including the transistors Q1 and Q2 are exemplary embodiments only and are present to buffer the second controller C2 from the single signal wire SW and to convert the relatively high voltages on the single signal wire SW to the relatively low voltages suitable for the second controller C2, and the other way around. Any other circuit fulfilling the same functions can be used. The signal levels on the single signal wire SW may be selected to fit the signal levels the second controller can handle.

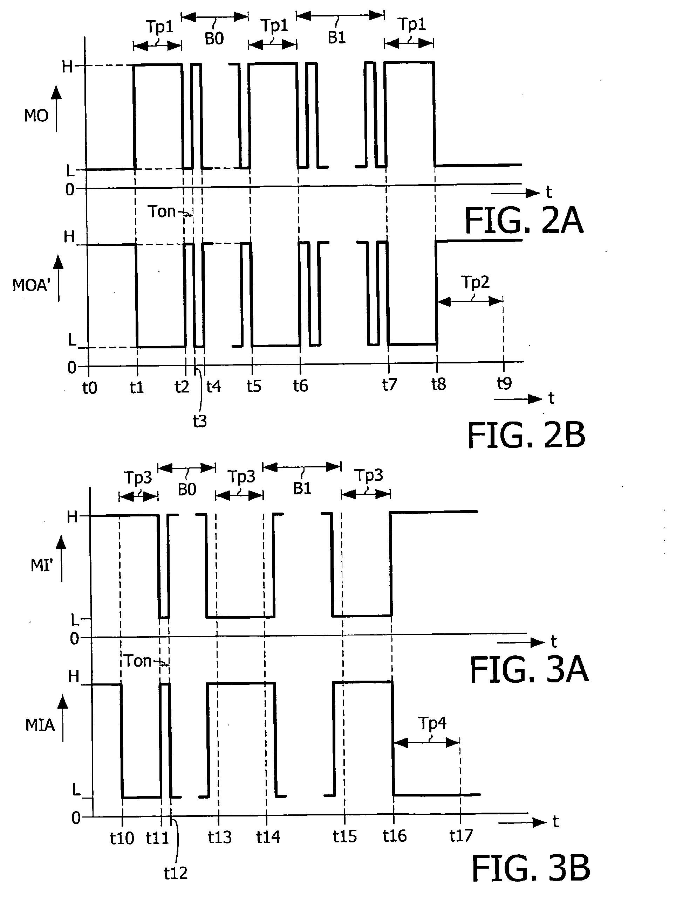

Preferably, all the input and output signals are digital signals which have a low and a high level. The digital signals comprise words of bits. The transfer of words of bits between the first system S1 and the second system S2 will be elucidated with respect to the signals shown in Figs. 2 and 3.

Figs. 2A-B show signals elucidating the communication from the first controller to the second controller. Fig. 2A shows the signal MO at the output OP1 of the first controller C1, and Fig. 2B shows the signal MOA' on the input SI of the second controller C2. In this embodiment, both the signals MO and MOA' are digital signals which have a high level H and a low level L, and which comprise words of bits B0, B1. When the first controller C1 sends information to the second controller C2, the switch signal MS has a low level to prevent that the send information is directly fed back to the input IP of the optocoupler U2 instead to the second controller C2. If connected to the single signal wire SW, the diode D2 limits the voltage on this wire SW. The output signal MI' has a high level.

In the starting situation from the instant t0 to the instant t1, before the communication starts, the output signal MO has a low level L and the transistor T1 has a high impedance such that the voltage on the single signal wire SW is determined by the second system S2. The high level of the output signal MI' causes a high level of both the voltage at the emitter of the transistor Q2 and the voltage on the single signal wire SW. Due to the high level voltage on the single signal wire, the transistor Q1 supplies a high level signal MOA' to the input SI.

At the instant t1, the first controller C1 changes its output signal MO to the high level H. The high level is maintained during the period in time Tp1 lasting from the instant t1 to the instant t2. The transistor T1 becomes a low impedance and the adapted output signal MOA on the single signal wire SW changes to a low level. Due to the low level on the single signal wire SW, the transistor Q1 changes the level of the signal MOA' to a low level. If This change of the signal MOA to the low level during a sufficient long period in time indicates to the second controller C2 that the controller C1 will start to send a word of bits. The bits can be coded in many ways, for example, a "0" may comprise a particular number of pulses, while a "1" comprises another number of pulses. Alternatively, the pulses may have different durations for a "0" and a "1". In the example shown, the bits B0 and B1 are defined by the number of pulses.

The pulses are generated by changing the level of the output signal MO. As elucidated before, a high level of the output signal MO causes a low level of the signal MOA' and the other way around. A few pulses are shown, starting at the instants t2, t4, t6 or ending at the instants t5, t7. The on-period of the pulses Ton is defined by the time period lasting from the instants t2 to t3.

After the last bit B1 of the word has been sent by the controller C1, the level of the output signal MO is again kept high during the period Tp1 lasting from the instant t7 to the instant t8, and then, at the instant t8, the level of the output signal MO is made low. The second controller C2 detects that the signal MOA' has a high level which lasts longer than the period of time Tp2 lasting from the instant t8 to the instant t9 and thus knows that the end of the word is reached. The duration of the on-time Ton of the pulses should of course be shorter than the period of time Tp2.

Figs. 3A-B show signals elucidating the communication from the second controller to the first controller. Fig. 3A shows the signal MI' at the output SP of the second controller C2, and Fig. 3B shows the signal MIA on the input IP of the first controller C1. In this embodiment, both the signals MI' and MIA are digital signals which have a high level H and a low level L, and which comprise words of bits B0, B1. When the second controller C2 sends information to the first controller C1, the switch signal MS has a high level to enable the send information to reach the input IP of the optocoupler U2. The output signal MO has a low level.

In the starting situation up to the instant t10, before the communication starts, the switch signal MS has still a low level and the opto-triac disconnects the single signal wire SW from the diode D2. Due to the pull-up resistor R3, the signal MIA has a high level. At the instant t10, the switch signal MS changes to a high level and the level on the single signal wire SW is supplied to the diode D2. The signal MI' has a high level H and the level of both the voltage at the emitter of the transistor Q2 and the voltage on the single signal wire SW have a high level. This high level is fed through the opto-triac T3 to the diode D2. The impedance of the transistor T2 becomes relatively low and the signal MIA changes to a low level L. The signal MI' is kept at the high level during a period in time Tp3 lasting from the instant t10 to the instant t11. The corresponding relatively long duration of the low level of the signal MIA indicates to the first controller C1 that the second controller C2 will send a word of bits B0, B1.

At the instant t11, the second controller C2 changes its output signal MI' to the low level L. The voltage at the emitter of the transistor Q2 drops, the amount of light emitted by the diode D2 drops also and the level of the signal MIA increases. At the instant t12, the second controller C2 changes its output signal MI' to the high level H. Again, this results in a low level of the signal MIA. Thus, the pulses in the output signal MI' of the second controller C2 are converted into the pulses input signal MI on the single signal wire SW and into pulses of the adapted input signal MIA on the input IP of the first controller C1. A few pulses are shown, starting at the instants t11, t13, t15 or ending at the instant t14. The on-period of the pulses Ton is defined by the time period lasting from the instants t11 to t12.

After the last bit B1 of the word has been sent by the controller C2, the level : of the output signal MI' is again kept low during the period Tp3 lasting from the instant t15 to the instant t16, and then, at the instant t16, the level of the output signal MI' is made high. The first controller C1 detects that the signal MIA has a low level which lasts longer than the period of time Tp5 lasting from the instant t16 to the instant t17 and thus knows that the end of the word is reached. The duration of the on-time Ton of the pulses should of course be shorter than the period of time Tp4.

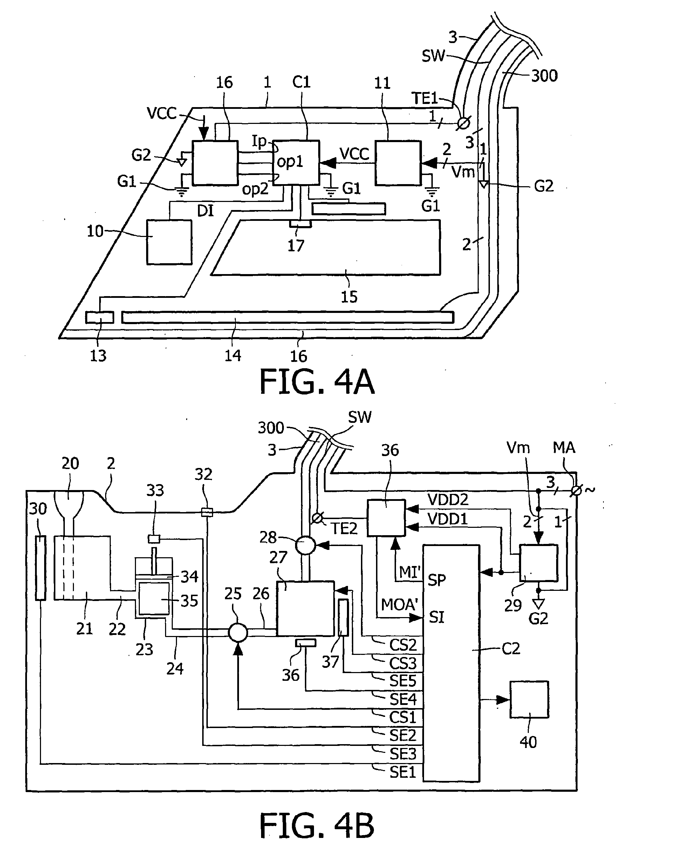

Figs. 4A-B show schematically a representation of an embodiment of an ironing system which comprises an iron as shown in Fig. 4A and an ironing station as shown in Fig. 4B. The iron 1 is connected to the ironing station 2 via a cord hose 3. The cord hose comprises: a conduit 300 to transport steam from the ironing station to the iron 1, and insulated conductive wires to supply the mains voltage to the iron 1. In countries with a relatively high mains voltage (higher than 120 volts) further an earth wire is present. The iron 1 comprises the first system S1 with the first controller C1, and the ironing station comprises the second system S2 with the second controller C2. The iron 1 has a display 10 to display information to the user. The communication system allows the ironing station 2 to send messages to the iron 1 via the single signal wire SW while a galvanic separation is maintained.

First the ironing station 2 will be discussed. The ironing station 2 comprises a water reservoir 21 with a water inlet 20. A pump 25 pumps the water from the water reservoir 21 via a calc cleaning unit 23 to a boiler or steam generator 27. The conduit 22 is arranged to connect the calc cleaning unit 23 with the water reservoir 21. The conduit 24 connects the calc cleaning unit 23 with the pump 25, and the conduit 26 connects the pump with the steam generator 27. An electro valve 28 is arranged between the steam generator 27 and the conduit 300. The ironing station 2 further comprises sensors 30, 32, 33, 34, 36 and 37 which indicate a state of a sub-unit of the ironing station 2.

The sensor 30 senses the level of the water in the water reservoir 21. For example the sensor 30 may comprise a reed-switch arranged at a bottom section of a side wall of the reservoir 21 and a magnetic floater in the water reservoir to cooperate with the reed-switch. If the water level drops below a predetermined level, the magnetic floater will activate the reed-switch and the sense signal SE1 supplied by the sensor 30 indicates this event to the second controller C2 which may take adequate action such as communication to the iron 1 that the display should indicate to the user the actual water level, and/or a warning when the water level drops below a predetermined level.

The sensor 33, 34 senses whether the anti-scale agent 35 used in the calc cleaning unit 23 reaches its end of life. In the example shown, the useful life of the anti-scale agent 35 which resides in a cartridge (not shown) in he calc cleaning unit 23 is monitored. An ion exchangeable type of anti-scale agent (such as for example known as Duolite) has the property that its volume increased by about 30% at its end of life. This volume increase can be detected by a suitable sensor. The sensor shown comprises a spring loaded plunger 34 which rests on the anti-scale agent 35. The volume expansion of the anti-scale agent 35 causes the plunger 34 to move towards the switch 33. When the switch 33 is closed, the sense signal SE3 indicates to the second controller C2 that the anti-scale agent 35 is near to or has reached its end of life. The second controller C2 may forward the status of the anti-scale agent 35 via the single signal wire SW to the iron 1 to display a message on the display indicating the life time of the anti-scale agent, and/or to warn that the end of life of the anti-scale agent is (almost) reached.

The sensor 32 is a switch which monitors the correct resting position of the iron 1 on the ironing station 2. If the iron 1 is not properly resting on the switch 32, the sense signal SE2 indicates this to the second controller C2. Again, the controller C2 may send information to the iron 1 to display a warning that the iron is not resting at a proper position.

The sensor 36 is a temperature sensor positioned at the base of the steam generator 27. The controller C2 uses the sense information SE4 to supply a control signal CS3 to the steam generator 27 to control the temperature of the steam generator 27. The control signal CS3 may switch the heating element of the steam generator 27 on and off.

The sensor 37 supplies sense information SE5 which indicates the actual water level and/or whether the water level dropped below a minimum level in the steam generator 27. The controller C2 uses the sense information SE5 to maintain the water level in the steam generator 27 above a minimum level to provide an un-interrupted steam output. The controller C2 may further use the sense information SE5 to disable the electro-valve 28 when it is detected that the water level in the steam generator 27 dropped below the minimum level.

The ironing station 2 further comprises a power supply unit 29 which receives the mains voltage Vm via the mains plug MA. The power supply unit 29 supplies the power supply voltages VDD1 and VDD2 to the second controller C2. The second controller C2 supplies control signals CS1 and CS2 to the pump 25 and the electro-valve 28. The circuitry between the second controller C2 and the terminal TE2 which comprises the transistors Q1 and Q2 (see Fig. 1) is indicated by the block 36 which is situated between on the one hand the input SI and the output SP of the second controller C2 and the other hand the terminal TE2 connected to the single signal wire SW.

The ironing station 2 may comprise a display unit 40 to display any of the sensed signals by the sensors, or to display warnings to the user.

The iron 1 comprises a power supply unit 11 which receives the mains voltage Vm and supplies the power supply voltage VCC to the first system S1 which comprises the first controller C1 and the unit 16. The unit 16 comprises the opto-elements U1, U2, U3 and the resistors R1 and R2 as shown in Fig. 1. The unit 16 is connected between on the one hand the input IP and the outputs OP1 and OP2 of the first controller C1 and on the other hand the terminal TE1 connected to the single signal wire SW. The first controller C1 supplies display information DI to the display 10. The iron 1 further comprises a heater 14 to heat its sole and a switch 17, and may comprise a hand presence sensor 12 which indicates whether the user is holding the iron 1, and a temperature sensor 13 which senses the temperature of the sole. The switch 17, the hand presence sensor 12, and the temperature sensor 13 are connected to inputs of the first controller C1. When the switch 17 is closed, the controller C1 sends information via the single signal wire to the controller C2 which opens the electro valve to supply steam via the conduit 300 to the iron 1. The controller C1 may indicate the temperature of the sole as sensed by the temperature sensor 13 on the display 10. The first controller C1 uses both the status of the switch 32 as received via the single signal wire SW, and the status of the hand presence sensor 12 to warn the user if the hand presence sensor 12 indicates that the user is not holding the iron 1 and the iron 1 is not correctly positioned in its resting position as indicated by the switch 32.

Signals from the controller C1 in the iron 1 may be forwarded via the single signal wire SW to the iron station 2 to control functions in the iron station 2. For example, the signal of the hand-presence sensor 12 in combination with the stand sensor 32 may be used to initiate a safety shut-off of the system after a predetermined period of time. Instead of the hand-presence sensor 12, also a suitable motion sensor may be used. The safety shut-off may include switching off of the steam generator 27 and the heater 14. The safety shut-off may be de-activated once is detected that the iron is moved.

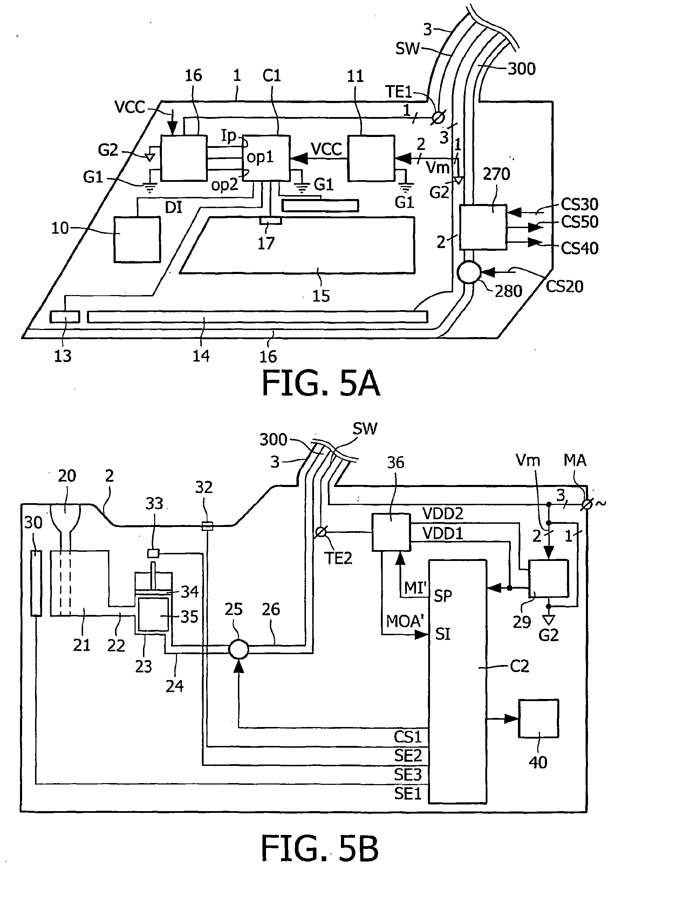

Figs. 5A-B show schematically a representation of another embodiment of an ironing system which comprises an iron and an ironing station. This ironing system is based on the ironing system shown in Figs. 4A-B with the difference that the steam generator 27 and the electro valve 28 are shifted to the iron 1 and now are indicated by the references 270 and 280, respectively. The control signals CS2 and CS3 are now supplied (not shown) by the controller C1, and are referred to as CS20 and CS30, respectively. The sense signals SE4 and SE5 are now referred to as SE40 and SE50 and are supplied (not shown) to the controller C1. Now, the water is pumped by the pump 25 in the iron station to the iron 1 via the conduit 300 in the hose and the steam generator 270 and the electro-valve 280 which regulates the steam output are controlled by the first controller C1.

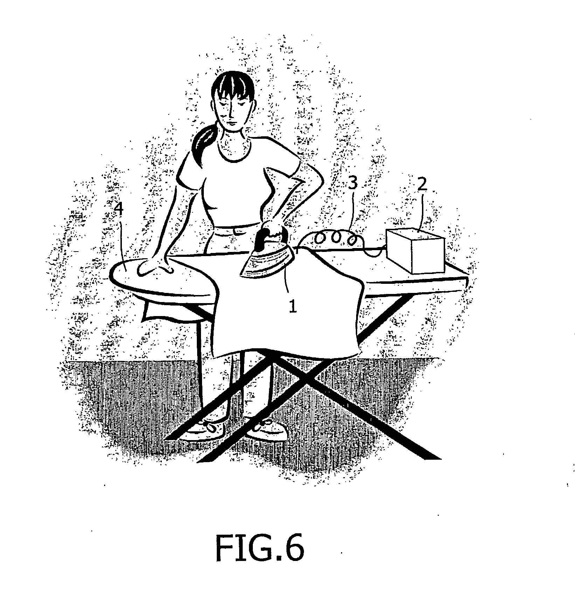

Fig. 6 shows schematically a representation of an ironing system which comprises an iron, an ironing station and an ironing board. The board 4 is constructed to have a ironing surface at a height suitable to the user. The item to be ironed rests on the ironing surface. In use, the iron 1 is moved on the item to be ironed and the steam or water is supplied from the ironing station 2 to the iron 1 via the hose 3. The ironing station 2 is positioned on or attached to the ironing board 4. Preferably, the hose 3 is held at a distance above the board sufficiently high to not bother the user.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A communication system for transferring a signal over a single signal wire (SW) between a first system (S1) and a second system (S2), the first system (S1) comprises:
a first controller (C1) for supplying an output signal (MO) and a switch signal (MS), and for receiving an adapted input signal (MIA), wherein the output signal (MO), the switch signal (MS), the adapted input signal (MIA), and the first controller (C1) are referenced to a first ground potential (G1),
a first galvanic separating unit (U1) for receiving the output signal (MO), the first ground potential (G1), and a second ground potential (G2) to supply to the single signal wire (SW) an adapted output signal (MOA) referenced to the second ground potential (G2),
a second galvanic separating unit (U2) for receiving the first ground potential (G1), the second ground potential (G2) and at an input terminal (IT) an input signal (MI) referenced to the second ground potential (G2) to supply the adapted input signal (MIA) referenced to the first ground potential (G1), and
a galvanic separated switching unit (U3) for receiving the switch signal (MS) and the first ground potential (G1), and having a switching path (T3) arranged between the single signal wire (SW) and the input terminal (IT), wherein the switching path (T3) is controlled by the switch signal (MS) over an galvanic separation to selectively connect the single signal wire (SW) to the input terminal (IT), and
the second system (S2) comprises a second controller (C2) referenced to the second ground potential (G2) for supplying the input signal (MI) to the single signal wire (SW), and for receiving the adapted output signal (MOA) from the single signal wire (SW).

2. A communication system as claimed in claim 1, wherein the first galvanic separating unit (U1) comprises an optocoupler having:
a light emitting diode (D1) for receiving at one end the output signal (MO) and at another end the first ground potential (G1), and
a light sensitive transistor (T1) having a main current path arranged between the single signal wire (SW) and the second ground potential (G2).

3. A communication system as claimed in claim 1, wherein the second galvanic separating unit (U2) comprises an optocoupler having:
a light emitting diode (D2) having one end being coupled to the input terminal and having another end for receiving the second ground potential (G2), and
a light sensitive transistor (T2) having a main current path arranged between the first ground potential (G1) and the adapted input signal (MIA).

4. A communication system as claimed in claim 1, wherein the galvanic separated switching unit (U3) comprises an opto-triac having:
a light emitting diode (D3) for receiving at one end the switching signal (MS) and at another end the first ground potential (G1), and
a light sensitive triac (T3) having a main current path arranged between the single signal wire (SW) and the input terminal (IT).

5. A method of communicating in a communication system for transferring a signal over a single signal wire (SW) between a first system (S1) and a second system (S2) as claimed in claim 1, the method comprises:
(i) in a first mode
supplying (C1) by the first controller (C1) of the switch signal (MS) having a level for disconnecting the input terminal (IT) from the single signal wire (SW),
supplying (C1) by the first controller (C1) of the output signal (MO) having a varying level to supply words of bits, and
receiving (C2) by the second controller (C2) of the adapted output signal (MOA) to recover the words of bits, or
(ii) in a second mode
supplying (C1) by the first controller (C1) of the switch signal (MS) having a level for connecting the input terminal (IT) to the single signal wire (SW),
supplying (C2) by the second controller (C2) of the input signal (MI) having a varying level to supply words of bits, and
receiving (C1) by the first controller (C1) of the adapted input signal (MIA) to recover the words of bits.

6. An ironing system comprising the communication system as claimed in claim 1, an iron (1), and an ironing station (2) connected to the iron (1) via a cord hose (3) comprising the single signal wire (SW),
the ironing station (2) comprises: a sensor (30; 32; 33) for sensing a state of a sub-unit (21; 32; 35) of the ironing station (2) to obtain a sense signal (SE1; SE2; SE3), and the second controller (C2) for receiving the sense signal (SE1; SE2; SE3) to supply sense information as the input signal (MI) to the single signal wire (SW),
the iron (1) comprises: a display (10), and the first controller (C1) for receiving the input signal (MI) to supply display information (DI) representing the sense information to the display (10).

7. An ironing system as claimed in claim 6, wherein the ironing station (2) further comprises a water reservoir (21), and wherein the sensor (30) is arranged for sensing a water level in the water reservoir (21).

8. An ironing system as claimed in claim 6, wherein the ironing station (2) further comprises a water reservoir (21), and an anti-scale agent (35) arranged in a water supply path, and the sensor (33) is arranged for sensing a status of the anti-scale agent (35).

9. An ironing system as claimed in claim 6, wherein sensor is a switch (32) for detecting whether the iron (1) is resting on a predetermined area of the ironing station (2).

10. An ironing system as claimed in claim 6, wherein
the cord hose (3) further comprises a conduit (300),
the iron (1) comprises a steam generator (16), and
the ironing station (2) comprises a water reservoir (21) and a pump (25) for pumping water to the steam generator (16) through the conduit (300).

11. An ironing system as claimed in claim 6, wherein
the cord hose (3) comprises a first conduit (300),
the iron (1) comprises a steam activating switch (12) connected to the first controller (C1) for supplying the output signal (MO) in accordance with a status of the steam activating switch (12) to the single signal wire (SW), and
the ironing station (2) comprises a water reservoir (21), a steam generator (27), a pump (25) for pumping a water through a second conduit (22, 24, 26) from the water reservoir (21) to the steam generator (27), and an electronic controlled valve (28) arranged between the steam generator (27) and the first conduit (300), wherein the second controller (C2) has an output for controlling the electronic controlled valve (28) in correspondence with the output signal (MO).

12. An ironing system as claimed in claim 11, wherein the ironing station (2) further comprises a temperature sensor (36) for supplying a temperature signal (SE4) indicative for a temperature in the steam generator (27) to the second controller (C2), the second controller (C2) being arranged for supplying a temperature control signal (CS3) to the steam generator (27) for controlling the temperature in the steam generator (27).

13. An ironing system as claimed in claim 11, wherein the ironing station (2) further comprises a water level sensor (37) for supplying a level signal (SE5) indicative for a water level in the steam generator (27) to the second controller (C2), the second controller (C2) being arranged for activating the pump (25) to maintain a predetermined water level in the steam generator (27).

14. An ironing system as claimed in claim 13, wherein the second controller (C2) is further arranged for disabling the electronic controlled valve (28) if the level signal (SE5) indicates that the water level in the steam generator (27) dropped below the predetermined water level.

15. An ironing system as claimed in claim 9, wherein the iron (1) further comprises a presence sensor (17) for supplying an presence signal indicative for a presence of a hand of the user to the first controller (C1), the first controller (C1) being arranged for supplying a message indicative for a status of the presence sensor (17) to the second controller (C2) via the single signal wire (SW), the second controller (C2) being arranged for initiating a safety shut-off of the ironing system if the presence signal indicates that the hand of the user is not present longer than a predetermined period of time, and if the switch (32) for detecting whether the iron (1) is resting on the predetermined area of the ironing station (2) indicates that the iron (1) is not resting on the predetermined area.

16. An ironing system as claimed in claim 9, wherein the ironing station (2) comprises a display (40) connected to the second controller (C2) for displaying information to a user.

17. An ironing system as claimed in claim 6, further comprising an ironing board (4), the ironing station (2) being connected to or being part of the ironing board (4).

## Patentansprüche

1. Kommunikationssystem zur Übertragung eines Signals über einen einzelnen Signaldraht (SW) zwischen einem ersten System (S1) und einem zweiten System (S2),
wobei das erste System (S1) umfasst:
eine erste Steuereinheit (C1) zur Bereitstellung eines Ausgangssignals (MO) und eines Schaltsignals (MS) sowie zum Empfang eines angepassten Eingangssignals (MIA), wobei das Ausgangssignal (MO), das Schaltsignal (MS), das angepasste Eingangssignal (MIA) und die erste Steuereinheit (C1) mit einem ersten Erdpotential (G1) in Bezug zu setzen sind,
eine erste galvanische Trenneinheit (U1) zum Empfang des Ausgangssignals (MO), des ersten Erdpotentials (G1) und eines zweiten Erdpotentials (G2), um dem einzelnen Signaldraht (SW) ein angepasstes Ausgangssignal (MOA), bezogen auf das zweite Erdpotential (G2), zuzuführen,
eine zweite galvanische Trenneinheit (U2) zum Empfang des ersten Erdpotentials (G1), des zweiten Erdpotentials (G2) sowie eines Eingangssignals (MI), bezogen auf das zweite Erdpotential (G2), an einem Eingangsanschluss (IT), um das angepasste Eingangssignal (MIA), bezogen auf das erste Erdpotential (G1), bereitzustellen, sowie
eine galvanisch getrennte Schalteinheit (U3) zum Empfang des Schaltsignals (MS) und des ersten Erdpotentials (G1), mit einem zwischen dem einzelnen Signaldraht (SW) und dem Eingangsanschluss (IT) angeordneten Schaltweg (T3), wobei der Schaltweg (T3) über eine galvanische Trennung von dem Schaltsignal (MS) gesteuert wird, um den einzelnen Signaldraht (SW) mit dem Eingangsanschluss (IT) selektiv zu verbinden, und
das zweite System (S2) eine zweite Steuereinheit (C2), bezogen auf das zweite Erdpotential (G2), umfasst, um dem einzelnen Signaldraht (SW) das Eingangssignal (MI) zuzuführen und von dem einzelnen Signaldraht (SW) das angepasste Ausgangssignal (MOA) zu empfangen.

2. Kommunikationssystem nach Anspruch 1, wobei die erste galvanische Trenneinheit (U1) einen Optokoppler umfasst mit:
einer Licht emittierenden Diode (D1), um an einem Ende das Ausgangssignal (MO) und an einem anderen Ende das erste Erdpotential (G1) zu empfangen, sowie
einem lichtempfindlichen Transistor (T1) mit einer zwischen dem einzelnen Signaldraht (SW) und dem zweiten Erdpotential (G2) angeordneten Hauptstrombahn.

3. Kommunikationssystem nach Anspruch 1, wobei die zweite galvanische Trenneinheit (U2) einen Optokoppler umfasst mit:
einer Licht emittierenden Diode (D2), welche ein an den Eingangsanschluss gekoppeltes Ende und ein anderes Ende zum Empfang des zweiten Erdpotentials (G2) aufweist, sowie
einem lichtempfindlichen Transistor (T2) mit einer zwischen dem ersten Erdpotential (G1) und dem angepassten Eingangssignal (MIA) angeordneten Hauptstrombahn.

4. Kommunikationssystem nach Anspruch 1, wobei die galvanisch getrennte Schalteinheit (U3) einen Optotriac umfasst mit:
einer Licht emittierenden Diode (D3), um an einem Ende das Schaltsignal (MS) und an einem anderen Ende das erste Erdpotential (G1) zu empfangen, sowie
einem lichtempfindlichen Triac (T3) mit einer zwischen dem einzelnen Signaldraht (SW) und dem Eingangsanschluss (IT) angeordneten Hauptstrombahn.

5. Verfahren zum Kommunizieren in einem Kommunikationssystem, um über einen einzelnen Signaldraht (SW) zwischen einem ersten System (S1) und einem zweiten System (S2) nach Anspruch 1 ein Signal zu übertragen, wobei das Verfahren die folgenden Schritte umfasst:
(i) in einem ersten Modus
Bereitstellung (C1) des Schaltsignals (MS), welches einen Pegel zum Trennen des Eingangsanschlusses (IT) von dem einzelnen Signaldraht (SW) aufweist, durch die erste Steuereinheit (C1),
Bereitstellung (C1) des Ausgangssignals (MO), welches einen variierenden Pegel zur Bereitstellung von Bitworten aufweist, durch die erste Steuereinheit (C1), sowie
Empfang (C2) des angepassten Ausgangssignals (MOA) zum Wiederherstellen von Bitworten von der zweiten Steuereinheit (C2).
(ii) in einem zweiten Modus
Bereitstellung (C1) des Schaltsignals (MS), welches einen Pegel zum Verbinden des Eingangsanschlusses (IT) mit dem einzelnen Signaldraht (SW) aufweist, durch die erste Steuereinheit (C1),
Bereitstellung (C2) des Eingangssignals (MI), welches einen variierenden Pegel zur Bereitstellung von Bitworten aufweist, durch die zweite Steuereinheit (C2), sowie
Empfang (C1) des angepassten Eingangssignals (MIA) zum Wiederherstellen der Bitworte von der ersten Steuereinheit (C1).

6. Bügelsystem mit dem Kommunikationssystem nach Anspruch 1, einem Bügeleisen (1) sowie einer Bügelstation (2), die mit dem Bügeleisen (1) über eine, den einzelnen Signaldraht (SW) enthaltende Kabelschnur (3) verbunden ist,
wobei die Bügelstation (2) umfasst: einen Sensor (30; 32; 33) zum Abtasten eines Zustands einer Untereinheit (21; 32; 35) der Bügelstation (2), um ein Abtastsignal (SE1; SE2; SE3) zu erhalten, sowie die zweite Steuereinheit (C2) zum Empfang des Abtastsignals (SE1; SE2; SE3), um dem einzelnen Signaldraht (SW) Abtastinformationen als Eingangssignal (MI) zuzuführen,
wobei das Bügeleisen (1) umfasst: eine Anzeige (10) sowie die erste Steuereinheit (C1) zum Empfang des Eingangssignals (MI), um der Anzeige (10) Anzeigeinformationen (DI), welche die Abtastinformationen darstellen, zuzuführen.

7. Bügelsystem nach Anspruch 6, wobei die Bügelstation (2) weiterhin einen Wasserbehälter (21) umfasst, und wobei der Sensor (30) zum Abtasten eines Wasserpegels in dem Wasserbehälter (21) angeordnet ist.

8. Bügelsystem nach Anspruch 6, wobei die Bügelstation (2) weiterhin einen Wasserbehälter (21) und ein in einem Wasserzuführweg vorgesehenes Kesselsteinverhütungsmittel (35) umfasst und der Sensor (33) zum Abtasten eines Zustands des Kesselsteinverhütungsmittels (35) angeordnet ist.

9. Bügelsystem nach Anspruch 6, wobei der Sensor ein Schalter (32) ist, um festzustellen, ob das Bügeleisen (1) auf einem vorgegebenen Bereich der Bügelstation (2) aufliegt.

10. Bügelsystem nach Anspruch 6, wobei
die Kabelschnur (3) weiterhin eine Wasserversorgungsleitung (300) umfasst,
das Bügeleisen (1) einen Dampferzeuger (16) umfasst und
die Bügelstation (2) einen Wasserbehälter (21) sowie eine Pumpe (25) umfasst, um Wasser durch die Wasserversorgungsleitung (300) zu dem Dampferzeuger (16) zu pumpen.

11. Bügelsystem nach Anspruch 6, wobei
die Kabelschnur (3) eine erste Wasserversorgungsleitung (300) umfasst,
das Bügeleisen (1) einen mit der ersten Steuereinheit (C1) verbundenen Dampfaktivierungsschalter (12) umfasst, um gemäß einem Zustand des Dampfaktivierungsschalters (12) dem einzelnen Signaldraht (SW) das Ausgangssignal (MO) zuzuführen, und
die Bügelstation (2) einem Wasserbehälter (21), einen Dampferzeuger (27), eine Pumpe (25), um Wasser von dem Wasserbehälter (21) durch eine zweite Wasserversorgungsleitung (22, 24, 26) zu dem Dampferzeuger (27) zu pumpen, sowie ein zwischen dem Dampferzeuger (27) und der ersten Wasserversorgungsleitung (300) angeordnetes, elektrisch gesteuertes Ventil (28) umfasst, wobei die zweite Steuereinheit (C2) einen Ausgang umfasst, um das elektrisch gesteuerte Ventil (28) in Übereinstimmung mit dem Ausgangssignal (MO) zu steuern.

12. Bügelsystem nach Anspruch 11, wobei die Bügelstation (2) weiterhin einen Temperatursensor (36) umfasst, um der zweiten Steuereinheit (C2) ein für eine Temperatur in dem Dampferzeuger (27) charakteristisches Temperatursignal (SE4) zuzuführen, wobei die zweite Steuereinheit (C2) angeordnet ist, um dem Dampferzeuger (27) ein Temperatursteuersignal (CS3) zur Steuerung der Temperatur in dem Dampferzeuger (27) zuzuführen.

13. Bügelsystem nach Anspruch 11, wobei die Bügelstation (2) weiterhin einen Wasserpegelsensor (37) umfasst, um der zweiten Steuereinheit (C2) ein für einen Wasserpegel in dem Dampferzeuger (27) charakteristisches Pegelsignal (SE5) zuzuführen, wobei die zweite Steuereinheit (C2) angeordnet ist, um die Pumpe (25) zur Aufrechterhaltung eines vorgegebenen Wasserpegels in dem Dampferzeuger (27) zu aktivieren.

14. Bügelsystem nach Anspruch 13, wobei die zweite Steuereinheit (C2) weiterhin angeordnet ist, um das elektronisch gesteuerte Ventil (28) zu deaktivieren, wenn das Pegelsignal (SE5) meldet, dass der Wasserpegel in dem Dampferzeuger (27) unter den vorgegebenen Wasserpegel gefallen ist.

15. Bügelsystem nach Anspruch 9, wobei das Bügeleisen (1) weiterhin einen Präsenzsensor (17) umfasst, um der ersten Steuereinheit (C1) ein für die Präsenz einer Hand des Benutzers charakteristisches Präsenzsignal zuzuführen, wobei die erste Steuereinheit (C1) angeordnet ist, um der zweiten Steuereinheit (C2) über den einzelnen Signaldraht (SW) eine für einen Zustand des Präsenzsensors (17) charakteristische Nachricht zuzuführen, wobei die zweite Steuereinheit (C2) angeordnet ist, um eine Sicherheitsabschaltung des Bügelsystems auszulösen, wenn das Präsenzsignal meldet, dass die Hand des Benutzers länger als ein vorgegebener Zeitraum nicht präsent ist, und wenn der Schalter (32) zum Feststellen, ob das Bügeleisen (1) auf dem vorgegebenen Bereich der Bügelstation (2) aufliegt, signalisiert, dass das Bügeleisen (1) nicht auf dem vorgegebenen Bereich aufliegt.

16. Bügelsystem nach Anspruch 9, wobei die Bügelstation (2) eine mit der zweiten Steuereinheit (C2) verbundene Anzeige (40) umfasst, um einem Benutzer Informationen anzuzeigen.

17. Bügelsystem nach Anspruch 6, welches weiterhin ein Bügelbrett (4) umfasst, wobei die Bügelstation (2) mit dem Bügelbrett (4) verbunden oder Teil desselben ist.

## Revendications

1. Système de communication pour transférer un signal par l'intermédiaire d'un fil de signal unique (SW) entre un premier système (S1) et un second système (S2), le premier système (S1) comprend :
un premier dispositif de commande (C1) pour fournir un signal de sortie (MO) et un signal de commutation (MS), et pour recevoir un signal d'entrée adapté (MIA), dans lequel le signal de sortie (MO), le signal de commutation (MS), le signal d'entrée adapté (MIA), et le premier dispositif de commande (C1) sont indexés à un premier potentiel de terre (G1),
une première unité de séparation galvanique (U1) pour recevoir le signal de sortie (MO), le premier potentiel de terre (G1), et un second potentiel de terre (G2) pour fournir au fil de signal unique (SW) un signal de sortie adapté (MOA) indexé au second potentiel de terre (G2),
une seconde unité de séparation galvanique (U2) pour recevoir le premier potentiel de terre (G1), le second potentiel de terre (G2) et à une borne d'entrée (IT) un signal d'entrée (MI) indexé au second potentiel de terre (G2) pour fournir le signal d'entrée adapté (MIA) indexé au premier potentiel de terre (G1), et
une unité de commutation séparée galvanique (U3) pour recevoir le signal de commutation (MS) et le premier potentiel de terre (G1), et possédant un trajet de commutation (T3) agencé entre le fil de signal unique (SW) et la borne d'entrée (IT), dans lequel le trajet de commutation (T3) est commandé par le signal de commutation (MS) par l'intermédiaire d'une séparation galvanique pour connecter sélectivement le fil de signal unique (SW) à la borne d'entrée (IT), et
le second système (S2) comprend un second dispositif de commande (C2) indexé au second potentiel de terre (G2) pour fournir le signal d'entrée (MI) au fil de signal unique (SW), et pour recevoir le signal de sortie adapté (MOA) à partir du fil de signal unique (SW).

2. Système de communication selon la revendication 1, dans lequel la première unité de séparation galvanique (U1) comprend un opto-coupleur possédant :
une diode électroluminescente (D1) pour recevoir, à une extrémité, le signal de sortie (MO) et, à une autre extrémité, le premier potentiel de terre (G1), et
un transistor photosensible (T1) possédant un trajet de courant principal agencé entre le fil de signal unique (SW) et le second potentiel de terre (G2).

3. Système de communication selon la revendication 1, dans lequel la seconde unité de séparation galvanique (U2) comprend un opto-coupleur possédant :
une diode électroluminescente (D2) possédant une extrémité accouplée avec la borne d'entrée et possédant une autre extrémité pour recevoir le second potentiel de terre (G2), et
un transistor photosensible (T2) possédant un trajet de courant principal agencé entre le premier potentiel de terre (G1) et le signal d'entrée adapté (MIA).

4. Système de communication selon la revendication 1, dans lequel l'unité de commutation séparée galvanique (U3) comprend un opto-triac possédant :
une diode électroluminescente (D3) pour recevoir, à une extrémité, le signal de commutation (MS) et, à une autre extrémité, le premier potentiel de terre (G1), et
un triac photosensible (T3) possédant un trajet de courant principal agencé entre le fil de signal unique (SW) et la borne d'entrée (IT).

5. Procédé de communication dans un système de communication pour transférer un signal par l'intermédiaire d'un fil de signal unique (SW) entre un premier système (S1) et un second système (S2) selon la revendication 1, le procédé comprend les étapes consistant à :
(i) dans un premier mode,
fournir (C1), par l'intermédiaire du premier dispositif de commande (C1), le signal de commutation (MS) possédant un niveau pour déconnecter la borne d'entrée (IT) à partir du fil de signal unique (SW),
fournir (C1), par l'intermédiaire du premier dispositif de commande (C1), le signal de sortie (MO) possédant un niveau varié pour fournir des mots de bits, et
recevoir (C2), par l'intermédiaire du second dispositif de commande (C2), le signal de sortie adapté (MOA) pour récupérer les mots de bits, ou
(ii) dans un second mode,
fournir (C1), par l'intermédiaire du premier dispositif de commande (C1), le signal de commutation (MS) possédant un niveau pour connecter la borne d'entrée (IT) au fil de signal unique (SW),
fournir (C2), par l'intermédiaire du second dispositif de commande (C2), le signal d'entrée (MI) possédant un niveau varié pour fournir des mots de bits, et
recevoir (C1), par l'intermédiaire du premier dispositif de commande (C1), le signal d'entrée adapté (MIA) pour récupérer les mots de bits.

6. Système de repassage comprenant le système de communication selon la revendication 1, un fer à repasser (1), et un poste de repassage (2) connecté au fer à repasser (1) par l'intermédiaire d'un cordon flexible (3) comprenant le fil de signal unique (SW),
le poste de repassage (2) comprend : un capteur (30 ; 32 ; 33) pour détecter un état d'une sous-unité (21 ; 32 ; 35) du poste de repassage (2) pour obtenir un signal de détection (SE1 ; SE2 ; SE3), et le second dispositif de commande (C2) pour recevoir le signal de détection (SE1 ; SE2 ; SE3) pour fournir des informations de détection en tant que signal d'entrée (MI) au fil de signal unique (SW),
le fer à repasser (1) comprend : un affichage (10), et le premier dispositif de commande (C1) pour recevoir le signal d'entrée (MI) pour fournir des informations d'affichage (DI) représentant les informations de détection à l'affichage (10).

7. Système de repassage selon la revendication 6, dans lequel le poste de repassage (2) comprend en outre un réservoir d'eau (21), et dans lequel le capteur (30) est agencé pour détecter un niveau d'eau dans le réservoir d'eau (21).

8. Système de repassage selon la revendication 6, dans lequel le poste de repassage (2) comprend en outre un réservoir d'eau (21), et un agent antitartre (35) agencé dans un passage d'alimentation en eau, et le capteur (33) est agencé pour détecter un état de l'agent antitartre (35).

9. Système de repassage selon la revendication 6, dans lequel le capteur est un commutateur (32) pour détecter si le fer à repasser (1) repose sur une zone prédéterminée du poste de repassage (2).

10. Système de repassage selon la revendication 6, dans lequel
le cordon flexible (3) comprend en outre un conduit (300),
le fer à repasser (1) comprend un générateur de vapeur (16), et
le poste de repassage (2) comprend un réservoir d'eau (21) et une pompe (25) pour pomper de l'eau vers le générateur de vapeur (16) à travers le conduit (300).

11. Système de repassage selon la revendication 6, dans lequel
le cordon flexible (3) comprend un premier conduit (300),
le fer à repasser (1) comprend un commutateur d'activation de vapeur (12) connecté au premier dispositif de commande (C1) pour fournir le signal de sortie (MO) conformément à un état du commutateur d'activation de vapeur (12) au fil de signal unique (SW), et
le poste de repassage (2) comprend un réservoir d'eau (21), un générateur de vapeur (27), une pompe (25) pour pomper de l'eau à travers un second conduit (22, 24, 26) du réservoir d'eau (21) au générateur de vapeur (27), et un clapet à commande électronique (28) agencé entre le générateur de vapeur (27) et le premier conduit (300), dans lequel le second dispositif de commande (C2) comporte une sortie pour commander le clapet à commande électronique (28) en correspondance au signal de sortie (MO).

12. Système de repassage selon la revendication 11, dans lequel le poste de repassage (2) comprend en outre un capteur de température (36) pour fournir un signal de température (SE4) indicatif d'une température dans le générateur de vapeur (27) au second dispositif de commande (C2), le second dispositif de commande (C2) étant agencé pour fournir un signal de commande de température (CS3) au générateur de vapeur (27) pour commander la température dans le générateur de vapeur (27).

13. Système de repassage selon la revendication 11, dans lequel le poste de repassage (2) comprend en outre un capteur de niveau d'eau (37) pour fournir un signal de niveau (SE5) indicatif d'un niveau d'eau dans le générateur de vapeur (27) au second dispositif de commande (C2), le second dispositif de commande (C2) étant agencé pour activer la pompe (25) pour maintenir un niveau d'eau prédéterminé dans le générateur de vapeur (27).

14. Système de repassage selon la revendication 13, dans lequel le second dispositif de commande (C2) est en outre agencé pour désactiver le clapet à commande électronique (28) si le niveau signal (SE5) indique que le niveau d'eau dans le générateur de vapeur (27) est inférieur au niveau d'eau prédéterminé.

15. Système de repassage selon la revendication 9, dans lequel le fer à repasser (1) comprend en outre un capteur de présence (17) pour fournir un signal de présence indicatif d'une présence d'une main de l'utilisateur au premier dispositif de commande (C1), le premier dispositif de commande (C1) étant agencé pour fournir un message indicatif d'un état du capteur de présence (17) au second dispositif de commande (C2) par l'intermédiaire du fil de signal unique (SW), le second dispositif de commande (C2) étant agencé pour déclencher un arrêt de sécurité du système de repassage si le signal de présence indique que la période de présence de la main de l'utilisateur est inférieure à une période prédéterminée, et si le commutateur (32) pour détecter si le fer à repasser (1) repose sur la zone prédéterminée du poste de repassage (2) indique que le fer à repasser (1) ne repose pas sur la zone prédéterminée.

16. Système de repassage selon la revendication 9, dans lequel le poste de repassage (2) comprend un affichage (40) connecté au second dispositif de commande (C2) pour afficher des informations pour un utilisateur.

17. Système de repassage selon la revendication 6, comprenant en outre une planche à repasser (4), le poste de repassage (2) étant connecté à ou faisant partie de la planche à repasser (4).
